# EUROPÄISCHE PATENTSCHRIFT

(11) **EP 2 104 885 B1**
(45) Veröffentlichungstag und Bekanntmachung des Hinweises auf die Patenterteilung: **31.10.2012**
(21) Anmeldenummer: 08701159.9
(22) Anmeldetag: 18.01.2008
(51) Int. Cl.: G05B 19/418

(54) **PLANUNGSVORRICHTUNG UND VERFAHREN ZUR PLANUNG EINER TECHNISCHEN ANLAGE**
PLANNING DEVICE AND METHOD FOR PLANNING A TECHNICAL INSTALLATION
DISPOSITIF DE PLANIFICATION ET PROCÉDÉ POUR PLANIFIER UNE INSTALLATION TECHNIQUE

(43) Veröffentlichungstag der Anmeldung: 30.09.2009
(73) Patentinhaber: Siemens Aktiengesellschaft, 80333 München (DE)
(72) Erfinder: SCHLERETH, Michael, 91452 Wilhermsdorf (DE); STOLPER, Thilo, 90402 Nürnberg (DE)
(86) Internationale Anmeldenummer: PCT/EP2008/000383
(87) Internationale Veröffentlichungsnummer: WO 2009/089848

(56) Entgegenhaltungen:
- WO-A-2004/055609
- DE-A1- 10 345 178
- DE-A1-102006 010 500
- US-A1- 2005 038 537
- SCHUH ET AL: "Objektorientierte Fabrikplanung" 1. Januar 2007 (2007-01-01), WERKSTATTSTECHNIK ONLINE,, PAGE(S) 166 - 169 , XP009105868 ISSN: 1436-4980 in der Anmeldung erwähnt das ganze Dokument

## Beschreibung

Die Erfindung betrifft eine Planungsvorrichtung zur Planung einer technischen Anlage, insbesondere einer Fertigungsanlage, wobei die technische Anlage aus Modulen gebildet ist, die jeweils mechanische Komponenten und elektrische Komponenten aufweisen. Die Erfindung betrifft auch ein entsprechendes Verfahren zur Planung einer technischen Anlage.

In dem Artikel "objektorientierte Fabrikplanung" von G. Schuh, Werkstatttechnik Online, Jahrgang 97 (2007), H. 3, ist ein Verfahren für eine objektorientierte Fabrikplanung beschrieben. Es wird ein Vergleich mit dem Software Engineering hergestellt. Für die Planung einer Fabrik wird ein hierarchischer Aufbau vorgeschlagen. Module der Fabrik werden in hierarchisch aufeinander folgenden Planungsstufen von einer groben, schematischen Darstellung zu einer feinen, detaillierteren Darstellung ausgestaltet. Jedes Modul ist dabei, wie in der objektorientierten Programmierung, nach dem Prinzip der Kapselung so ausgestaltet, dass es bei einer Änderung der Planung leicht ausgetauscht werden kann. Interaktionen sind nur über explizit zur Verfügung gestellte Schnittstellen möglich.

Aus der Veröffentlichungsschrift US2005/0038537 A1 ist weiterhin ein Verfahren zur Unterstützung des Entwurfs einer Fertigungslinie bekannt, bei welchen Grund-Elementen für den Entwurf der Fertigungslinie jeweils Informationen zugeordnet sind, aus welchen dann Gesamt-Informationen für die daraus aufgebaute Fertigungslinie zusammengestellt werden.

Aus der WO 2004/055609 A2 ist zudem ein Steuerungssystem für eine Anlage mit mehreren Aggregaten bekannt, wobei das Steuerungssystem einen Datenspeicher für die Prozessvariablen der Anlage aufweist, dessen Datenstruktur unter Verwendung von Informationen aus dem Projektierungssystem für die Anlage erstellbar ist.

Der digitalen Planung von technischen Anlagen kommt eine immer größere Bedeutung zu. Durch eine virtuelle Abbildung der technischen Anlage können Investitionen bereits in einem sehr frühen Stadium durch eine Simulation abgesichert werden. Bei Produktionsanlagen kann eine Produktplanung sehr viel schneller in ein fertiges Produkt umgesetzt werden. Eine solche digitale Planung erfordert eine sehr hohe Datenmenge. Neben dem reinen digitalen Abbild der technischen Anlage durch ihre Geometrie in Form einer 3D-Simulation wird zunehmend versucht, auch die technischen Funktionalitäten der Anlage in Form einer virtuellen Inbetriebsetzung zu simulieren. Neben geometrischen und mechanischen Eigenschaften der Komponenten der technischen Anlage kommen damit auch immer mehr elektrische Eigenschaften hinzu. Bei einer Produktionsanlage werden also neben den geometrischen Eigenschaften, zum Beispiel eines Fertigungsroboters und den Maßen einer Fertigungszelle, auch Eigenschaften zum Beispiel eines elektrischen Motors, wie elektrische Ausgangsleistung oder Drehmoment, berücksichtigt. Alle Komponenten stehen in der Regel miteinander in einer Wechselwirkung. Um die Eignung einer Komponente für die vorgesehene Aufgabe zu prüfen, müssen weitere Komponenten bereits ausgewählt sein, um mittels einer Simulation festzustellen, ob das gewünschte Ergebnis erreicht wird. Die damit sich ergebende große Vielfalt an möglichen Kombinationen führte zu einem großen Planungsaufwand bei der Ermittlung einer optimalen Konfiguration.

Der Erfindung liegt die Aufgabe zu Grunde, eine Planungsvorrichtung anzugeben, mit der eine technische Anlage mit besonders geringem Planungsaufwand planbar ist. Weitere Aufgabe der Erfindung ist die Angabe eines entsprechenden Planungsverfahrens.

Erfindungsgemäß wird die auf eine Planungsvorrichtung gerichtete Aufgabe durch die Merkmale des Anspruchs 1 gelöst

Die Erfindung geht dabei von Erkenntnis aus, dass ein Abweichen von einer streng objektorientierten Planungssicht zu einer erhöhten Planungseffizienz führen kann. Eine streng objektorientierte Sicht erfordert eine Kapselung der Objekte. Durch die Erfindung wird demgegenüber eine Objekt übergreifende Planung ermöglicht. Durch eine Darstellung der mechanischen und elektrischen Komponenten in Komponentensätzen wird es möglich, durch Auswahl aus der Bibliothek ganze Komponentensätze Objekt übergreifend in die aktuelle Planung zu übernehmen. Durch eine Gruppierung der elektrischen Komponenten in einem Komponentensatz wird eine deutliche Vereinfachung des Planungsprozesses erreicht. Die Komponenten eines Komponentensatzes können so aufeinander abgestimmt sein, dass Planungen bezüglich der Wechselwirkungen der Komponenten eines Komponentensatzes untereinander vereinfacht wird. Ein Komponentensatz weist also bereits eine innere Verträglichkeit auf. Dabei wird die Planung iterativ dadurch verfeinert, dass ein Planer auf die Komponentensätze in einem unterschiedlichen Detaillierungsgrad zugreifen kann. Ein Komponentensatz ist also in mehreren Detaillierungsgraden in der Bibliothek gespeichert.

Erfindungsgemäß wird ein Komponentensatz eines höheren Detaillierungsgrades in den gleichen, bereits ausgewählten Komponentensatz niedrigeren Detaillierungsgrades nach Auswahl aus der Bibliothek so in den aktuellen Planungsstatus integriert, dass die Funktionalitäten des niedrigeren Detaillierungsgrades durch die Funktionalitäten des höheren Detaillierungsgrades ergänzt werden. Die Darstellung des höheren Detaillierungsgrades erfolgt also in dieser Ausführung nicht durch ein Überschreiben der bereits im niedrigeren Detaillierungsgrad vorhandenen Funktionalitäten sondern durch deren Ergänzung.

Bevorzugt sind die Komponentenfunktionalitäten zumindest teilweise durch Parameter abgebildet. Bevorzugter Maßen sind die Komponentenfunktionalitäten zumindest teilweise durch Funktionsautomaten so abgebildet, das in Verbindung mit Parameter eine Komponentenfunktion darstellbar ist. Vorzugsweise sind die Komponentenfunktionalitäten zumindest teilweise durch mathematische Funktionen abgebildet, mittels derer eine eine Transformation von ersten Parametern auf zweite, die Komponentenfunktionalität beschreibende Parameter erfolgt.

Die Komponentenfunktionalitäten können also in unterschiedlicher Weise in der Bibliothek abgebildet sein. In der einfachsten Form werden sie durch Parameter abgebildet. Bei einer weiteren Möglichkeit wird ein Funktionsautomat definiert, der abstrakt eine bestimmte Funktion beschreibt. Weiterhin ist es möglich, eine Komponentenfunktionalität über eine mathematische Funktion zu definieren, mittels derer bereits vorliegende Parameter so transformiert werden, dass die entstehenden neuen Parameter die Komponentenfunktionalitäten beschreiben.

Vorzugsweise sind Komponentensätze in einer Kollektion gruppiert. Es kann sinnvoll sein, Komponentensätze nach einer bestimmten Vorgabe zu gruppieren. Denkbar wäre zum Beispiel die Vorgabe, dass die zu verwendenden Komponenten sicherheitsgerichtet ausgeführt sein müssen. Eine weitere mögliche Vorgabe könnte die Verwendung von Komponenten eines bestimmten Herstellers sein. Indem nun Komponentensätze in einer solchen Vorgaben genügenden Kollektion gruppiert werden, wird der Planungsprozess weiter vereinfacht, da durch einfache Auswahl einer solchen Kollektion die Vorgaben eingehalten werden können.

Vorzugsweise können auswählbare Funktionalitäten von Komponentensätzen vor einem Anwender unsichtbar geschaltet werden. Ein solches unsichtbar schalten kann z.B. eine weitere Reduktion der Komplexität des Planungsprozesses bewirken. Wenn in der aktuellen Planungsstufe bestimmte Funktionalitäten irrelevant sind, können diese vor einem Planer verborgen werden, so dass dieser sich in seiner Planung auf die relevanten Funktionalitäten beschränken kann. Ein solches Unsichtbarschalten kann auch abhängig vom Status oder der Rolle des Anwenders erfolgen. Identifiziert sich etwa der Anmelder, z.B. beim Einloggen, so kann anhand eines zugeordneten Anmelderprofils der Umfang der dem Anwender freigeschalteten Funktionen oder auch Detaillierungsgrade festgelegt werden. Zum Beispiel kann auch die Erfahrung des Anwenders in Umgang mit dem System berücksichtigt werden.

Vorzugsweise ist die technische Anlage aus Modulen mit mechanischen Komponenten und elektrischen Komponenten gebildet, wobei jedes Modul eine Sollfunktionalität aufweist und wobei prüfbar ist, ob die sich mit einem ausgewählten Komponentensatz sich für ein Modul ergebende Modulfunktionalität mit der Sollfunktionalität im Rahmen einer vorgebbaren Genauigkeit übereinstimmt.

Die Funktionalität eines Moduls wird durch eine Sollfunktionalität beschrieben. Zur Realisierung dieser Sollfunktionalität kommt jetzt ein ganzer Komponentensatz zum Einsatz. Ein Komponentensatz könnte gewissermaßen als ein Satz von Kleidungsstücken verstanden werden. Das Überstreifen dieses Satzes von Kleidungsstücken zur Anprobe entspricht einem Vergleich der sich aus dem Komponentensatz ergebenden Funktionalität mit der Sollfunktionalität. Vorzugsweise wird der Komponentensatz mit der Zeit so weiterentwickelt, dass eine Übereinstimmung seiner Funktionalität mit der Sollfunktionalität einer möglichst großen Zahl von Modulen erreicht wird.

Bevorzugt erfolgt die Prüfung auf Übereinstimmung durch eine Simulation der Modulfunktionalitäten, wobei der Simulation die Komponentenparameter zugrunde gelegt werden. Eine digitale Planung einer technischen Anlage kann durch eine Simulation der Abläufe auf der technischen Anlage vervollständigt werden. Durch eine solche Simulation kann festgestellt werden, ob die verwendeten Komponenten tatsächlich die gewünschte Funktionalität liefern. Zum Beispiel könnte eine Echtzeitsimulation ergeben, dass die verwendeten Komponenten nicht zu einem Ablauf des Verfahrens in der angestrebten Geschwindigkeit führen. In diesem Fall kann also der Komponentensatz nicht unverändert zum Einsatz kommen.

Vorzugsweise erfolgt die Prüfung auf Übereinstimmung durch einen Vergleich von Sollparametern, die die Sollfunktionalität charakterisieren, mit entsprechenden Komponentenparametern des Komponentensatzes Die Sollfunktionalität wird also durch Parameter abgebildet. Ein Komponentensatz wird durch Parameter beschrieben, die zumindest teilweise in ihrer Art den Parametern der Sollfunktionalität entsprechen. Entsprechen die Parameter des Komponentensatz auch in ihrem Wert den Parametern der Sollfunktionalität, beziehungsweise liegen sie innerhalb eines entsprechenden Intervalls, so liegt die gewünschte Übereinstimmung vor.

Bevorzugt sind die elektrischen Komponenten mechatronisch mit zusätzlicher mechanischer Funktionalität ausgeführt. In zunehmendem Maße werden elektrische und mechanische Bestandteile einer Komponente zu einem integrierten Aufbau zusammengeführt. Zum Beispiel können piezoelektrische Bauteile mechanische Aufgaben erfüllen. Auch die integrierte Ausführung eines Greifarmes zusammen mit seinem elektrischen Antrieb kann eine mechatronische Komponente sein. Die Verwendung mechatronischer Komponenten führt zu einer weiteren Vereinfachung des Planungsprozesses.

Vorzugsweise ist die Planung durch einen in Hierarchieebenen gegliederten Planungsprozess mit aufeinander folgenden Planungsstufen durchführbar, wobei die mechanischen oder elektrischen Komponenten einer Unterplanungsstufe der mindestens zweiten Hierarchieebene die Eigenschaften der mechanischen oder elektrischen Komponenten der Oberplanungsstufe aus der der Unterplanungsstufe vorgelagerten Hierarchieebene und zusätzlich einen höheren Detaillierungsgrad hinsichtlich der Eigenschaften der mechanischen oder elektrischen Komponenten aufweist. Weiter bevorzugt weist die Planungsvorrichtung eine objektorientierte Architektur so auf, dass im Sinne der Regeln der objektorientierten Programmierung eine Planungsstufe durch Klassen beschrieben ist, die Objekte mit Eigenschaften der mechanischen und elektrischen Komponenten als Attribute und Methoden den Modulfunktionalitäten instantiieren, wobei eine Unterplanungsstufe Attribute und Methoden der Oberplanungsstufe erbt.

Durch einen in Hierarchieebenen geteilten Planungsprozess kann schrittweise in aufeinander folgenden Planungsstufen eine höhere Detailtiefe eingestellt werden. Durch eine Vererbung von Eigenschaften können Planungen einer vorhergehenden Planungsstufe in einfacher Weise konkretisiert werden. Indem nun eine Detaillierung durch Auswahl eines Komponentensatz aus einer Bibliothek verfügbar ist, kann in besonders effizienter Weise die Planung einer Planungsstufe mit hohem Detaillierungsgrad durchgeführt werden. Ein Komponentensatz ist dabei im Sinne der objektorientierten Programmierung als ein Satz von Klassen verfügbar.

Bevorzugt weist die Planungsvorrichtung eine Visualisierungsvorrichtung auf, in der die Module grafisch abbildbar sind, wobei der Detaillierungsgrad der grafischen Darstellung entlang den Planungsstufen hierarchisch absteigend wächst und wobei eine Darstellung der Unterplanungsstufe durch ein Überblenden von grafischen Elementen aus dieser Unterplanungsstufe über die Elemente ihrer Oberplanungsstufe erfolgt. Bei der Planung einer technischen Anlage ist eine Visualisierung erforderlich, die in der Regel durch eine 2D oder 3D Darstellung am Computer erfolgt. Eine erhöhte Detaillierung einer Planungsstufe wird nun günstiger Weise durch ein Überblenden ihrer Elemente über die abstrakten Elemente der vorhergehenden Planungsstufe erreicht. Die Verwendung ganzer Komponentensätze wird in dieser Visualisierung dadurch deutlich, dass eine bestimmte Kollektion wie eine Hülle über die abstraktere Darstellung gestreift wird. Eine Abweichung der sich aus der gewählten Kollektion, d.h. der Komponentensätze, ergebenden Funktionalität von der Sollfunktionalität kann durch grafische Mittel sichtbar gemacht werden. Zum Beispiel können Komponenten des Komponentensatz die die Abweichung von der Sollfunktionalität verursachen, blinkend oder in einer anderen Farbe dargestellt werden.

Vorzugsweise ist die technische Anlage eine Fertigungsanlagen zur Fertigung eines Produktes. Die digitale Planung einer Fabrik zur Fertigung eines Produktes ist in vielen Bereichen schon Realität. Die Planung einer solchen Fertigungsanlage bedeutet höchste Komplexität. Die Auswahl der elektrischen Komponenten, insbesondere von Automatisierungskomponenten, unterliegt in der Regel Randbedingungen des Anlagenerrichters beziehungsweise -betreibers. Insbesondere ist oft eine herstellerspezifische Auswahl zu berücksichtigen.

Die auf ein Verfahren gerichtete Aufgabe wird erfindungsgemäß durch die Merkmale Anspruchs 13 gelöst

Die Vorteile eines solchen Verfahrens ergeben sich aus den obigen Ausführungen zu den Vorteilen der Planungsvorrichtung

Bevorzugt erfolgt die Prüfung auf Übereinstimmung durch einen Vergleich von Sollparametern, die die Sollfunktionalität charakterisieren, mit den Komponentenparametern.

Vorzugsweise erfolgt die Prüfung auf Übereinstimmung durch eine Simulation der Modulfunktionalität, wobei der Simulation die Parameter des Komponentensatzes zugrunde gelegt werden.

Die Erfindung wird anhand der Zeichnungen näher erläutert. Es zeigen teilweise schematisch und nicht maßstäblich:
- FIG 1: eine technische Anlage,
- FIG 2: ein Modul einer technischen Anlage,
- FIG 3-5: eine Planungsvorrichtung und einen Komponentensatz,
- FIG 6: einen Funktionsautomat,
- FIG 7: eine Kollektion von Komponentensätzen,
- FIG 8: eine Visualisierungsvorrichtung zur grafischen Darstellung der Planung und
- FIG 9, 10: Darstellungen der Visualisierungsvorrichtung von Modulen mit verschiedenen Komponentensätzen

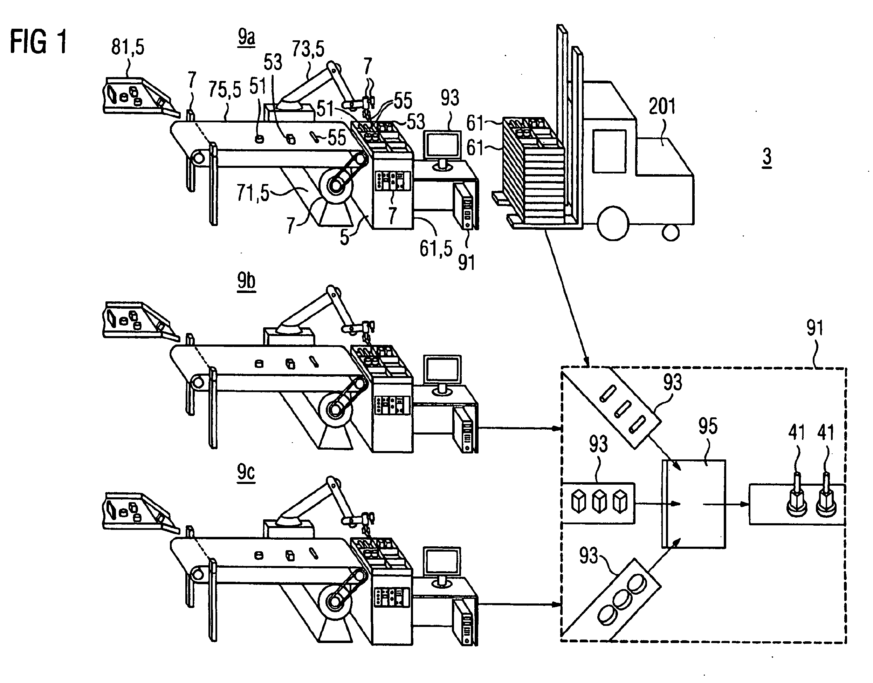

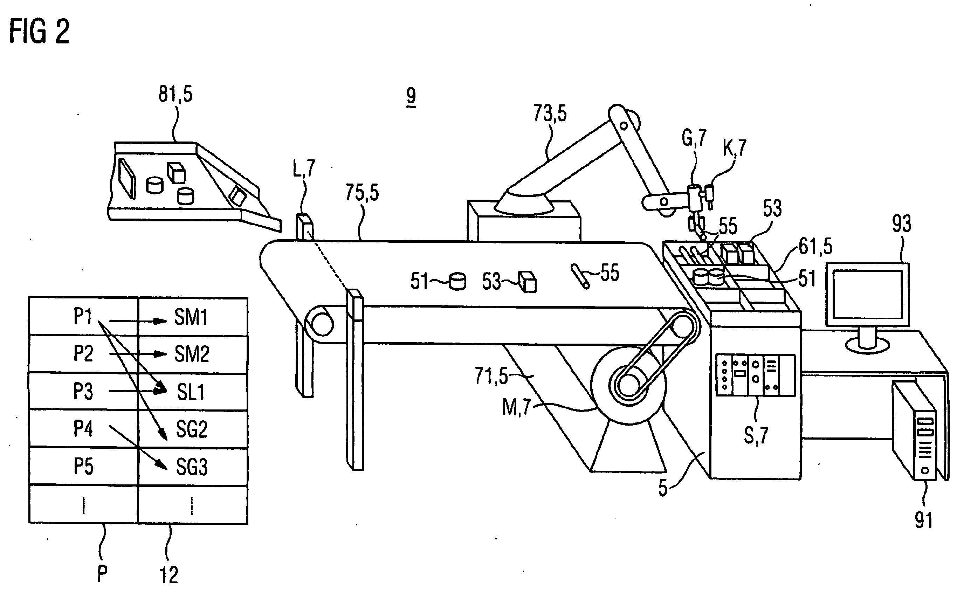

FIG 1 zeigt eine technische Anlage 3. Die technische Anlage 3 weist drei Module 9a, 9b, 9c auf. Die Module 9 werden in FIG 2 näher erläutert. Die technische Anlage 3 ist hier als Fertigungsanlage ausgeführt. Die Module 9 sortieren Fertigungsteile. Die Fertigungsteile werden in Paletten 61 über Gabelstapler 201 zu einem weiteren Fertigungsabschnitt 91 transportiert. Dort werden sie mittels Transportbändern 93 in einer Montageeinheit 95 zu einem Produkt 41 zusammengefügt. Die Planung einer solchen technischen Anlage 3 erfordert eine sehr genaue Beschreibung aller verwendeten Komponenten hinsichtlich ihrer Eigenschaften und Funktionen. Bei komplexeren technischen Anlagen führt dies schnell zu einem sehr aufwändigen Planungsprozess. Weiter unten wird näher erläutert, wie dieser Planungsprozess einfacher gestaltet werden kann.

FIG 2 zeigt eines der Module 9 der technischen Anlage 3 aus FIG 1. Das Modul 9 weist einen Roboter 73 mit einem Greifer G auf. Auf dem Greifer G ist zur Mustererkennung eine Kamera K installiert. Der Roboter 73 ist vor einem Förderer 75 aufgebaut. Der Förderer 75 weist für seinen Antrieb einen Motor M auf, der auf einem Fundament 71 aufgesetzt ist. Der Roboter 73, der Förderer 75 und das Fundament 71 sind mechanische Komponenten 5 des Moduls 9. Der Greifer G, die Kamera K und der Motor M sind elektrische Komponenten 7 des Moduls 9. Der Greifer G ist dabei als eine mechatronische Komponente ausgebildet. Neben elektrischen Komponenten für seinen Antrieb weist er auch mechanische Komponenten zum Greifen auf. Eine weitere elektrische Komponente ist eine speicherprogrammierbare Steuerung S. Diese Steuerung S dient zur Ablaufsteuerung des Fertigungsablaufes auf dem Modul 9. Mittels eines Computers 91 und eines Bildschirms 93 kann in den Ablauf eingegriffen und dieser parametriert werden. Über eine Zuführbahn 81 werden Produktteile 51, 53, 55 verschiedener Geometrie über den Förderer 75 zum Roboter 73 transportiert. Sie passieren dabei einen als Lichtschranke ausgebildeten Nährungssensor L. Der Roboter 73 erkennt mittels der Kamera K die verschiedenen Geometrien der Produktteile 51, 53, 55. Je nach Geometrie sortiert der Roboter 73 mittels des Greifer G die Produktteile 51, 53, 55 in eine Palette 61.

Die Sollfunktionalität des Moduls 9 ist in Parametern P beschrieben. Zum Beispiel gibt ein Parameter P1 einen Solldurchsatz an. Dies führt zu einer Vorgabe hinsichtlich einer Menge von Sollparametern 12 für die elektrischen Komponenten 7, z.B. für einen Parameter SM1 des Motors M aber auch hinsichtlich eines Parameters SL1 für eine Auflösung der Lichtschranke L oder eines Parameters SG2 der Greifgeschwindigkeit des Greifer G. So bestimmen auch andere Parameter F der Sollfunktionalität des Moduls 9 Parameter der elektrischen Komponenten 7.

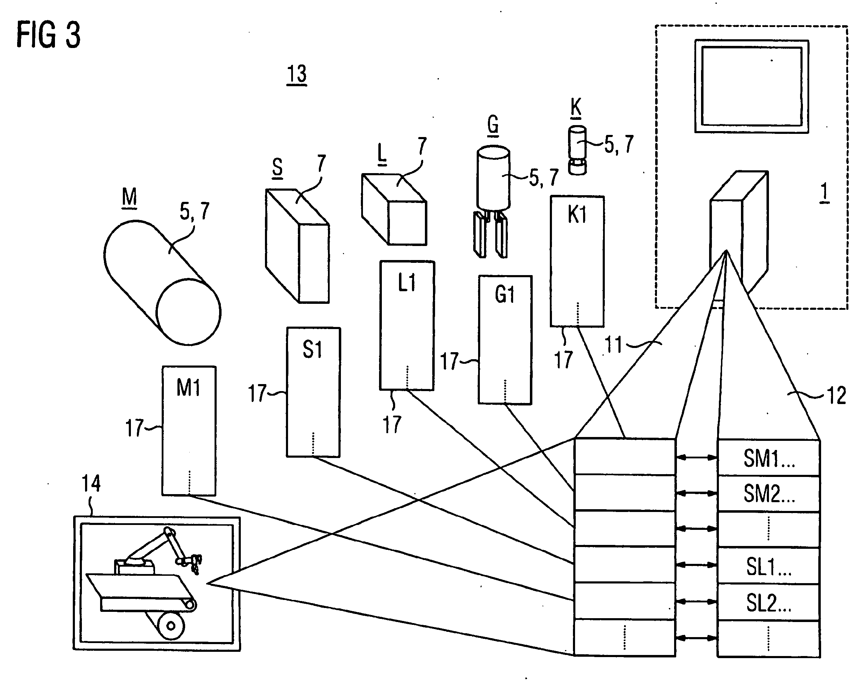

In FIG 3 ist ein Komponentensatz 13 abgebildet. Der Komponentensatz 13 weist einen Motor M, eine Steuerung S, eine Lichtschranke L, einem Greifer G und eine Kamera K auf. Jede dieser elektrischen Komponenten 7 weist einen Komponentenparametersatz 17 auf. Der Komponentensatz 13 ist zusammen mit weiteren Komponentensätzen in einer Bibliothek 11 einer Planungsvorrichtung 1 gespeichert. Der Planungsvorrichtung 1 stehen ebenfalls die Sollparameter 12 zur Verfügung, die, wie oben beschrieben, die Sollfunktionalität des Moduls 9 beschreiben. Durch einen Vergleich der Komponentenparameter 17 des Komponentensatz 13 mit den Sollparametern 12 wird überprüft, ob durch den Komponentensatz 13 die Sollfunktionalität des Moduls 9 umgesetzt werden kann. Eine weitere Möglichkeit für diese Überprüfung bietet eine Simulation des Fertigungsablaufes auf dem Modul 9. Hierzu wird mittels einer Simulationsvorrichtung 14 der Fertigungsablauf des Moduls 9 simuliert, wie er sich mit dem verwendeten Komponentensatz 13 ergeben würde. Wenn die Simulation einen zufriedenstellenden Fertigungsablauf ergibt, ist die Überprüfung erfolgreich.

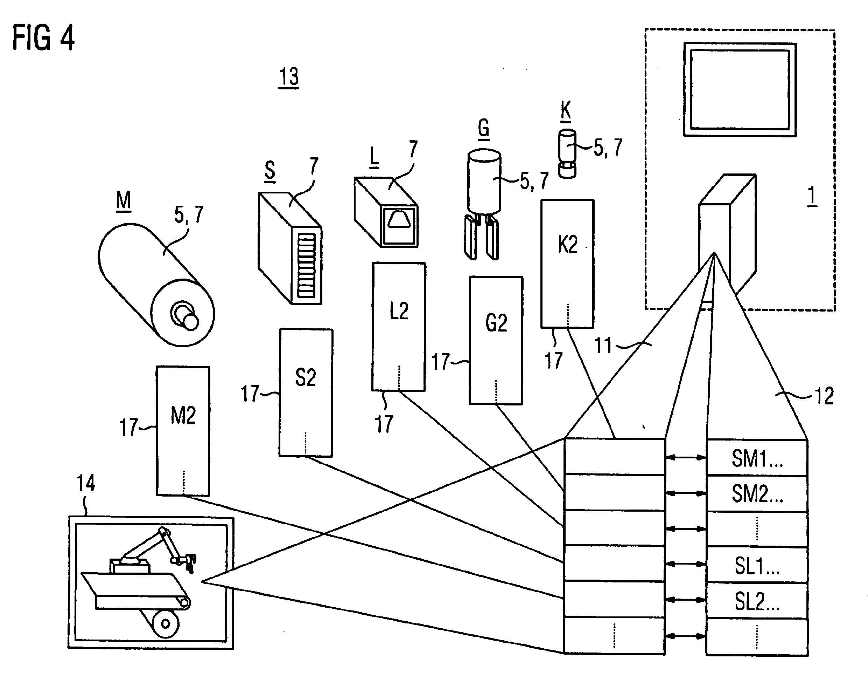

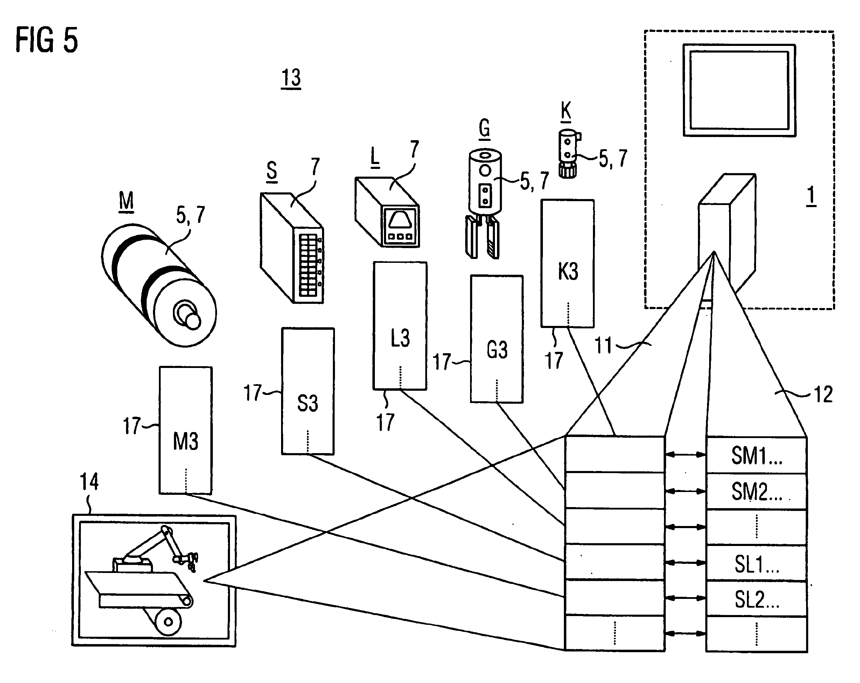

FIG 4 zeigt den Komponentensatz 13 aus FIG 3, wobei andere Komponentenparameter 17 zur Ergänzung der Komponentenparameter 17 aus FIG 3 so in der Bibliothek 11 abgespeichert sind, dass sich ein höherer Detaillierungsgrad ergibt, d.h. zusätzliche Funktionalitäten der Komponenten 5,7 des Komponentensatzes 13 werden dargestellt. Eine weitere, höhere Detaillierungsstufe ergibt sich dann mit dem Komponentensatz aus FIG 5. So wird es möglich, iterativ die Planung zu verfeinern. Anders als dies bisher über einen objektorientierten Ansatz mit Vererbungsmechanismen realisiert wurde, kann mit dem Komponentensatz orientierten Ansatz eine objektübergreifende Ausstattung der Planung erfolgen. Die Verwendung von Komponentensätzen mit wählbarem Detaillierungsgrad kann bildlich als ein Überstreifen von Hüllen erklärt werden. Auf die Darstellung eines schematischen Anlagenkonzeptes werden mit jeder höheren Detaillierüngsstufe Hüllen von Komponentensätzen übergestreift. Mit der oben beschriebenen Prüfung, ob die Sollfunktionalität erreicht wird, kann dieses Überstreifen mit einer Anprobe verglichen werden, ob die gewählten Komponenten auch passen. Im Planungsprozess kann der unterschiedliche Detaillierungsgrad durch geeignete grafische Darstellungen, etwa unterschiedliche Farben o.dgl., sichtbar gemacht werden. Ein entsprechendes Visualisierungssystem ist weiter unten beschrieben. Es ist hervorzuheben, dass verschiedene Hüllen voneinander so unabhängig gestaltet sein können, dass eine Hülle ohne Störung des Planungszustands entfernt oder durch eine andere Hülle ausgetauscht werden kann.

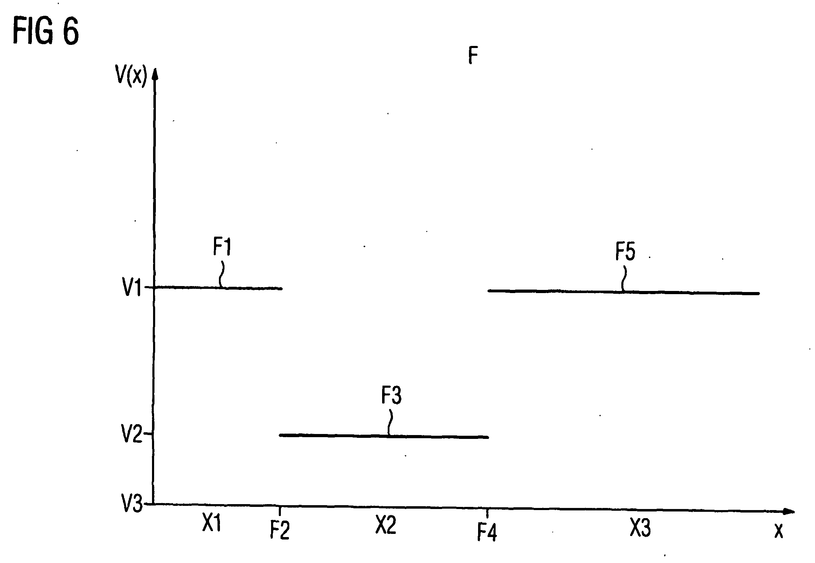

Neben einer Darstellung der Komponentenfunktionalität mittels Parameter kann diese Funktionalität auch durch einen Funktionsautomaten dargestellt sein. Dies wird an einem Beispiel in FIG 6 erläutert. Für einen Transport entlang einer Strecke, z.B. mit einem Förderband, gekennzeichnet mit der Variable x, ist die Transportgeschwindigkeit V(x) dargestellt. Der Funktionsautomat F gibt die Zustände F1 - F5 abhängig vom Ort x an, d.h. zunächst erfolgt ein Transport mit einer Geschwindigkeit V1 entlang eines Abschnittes X1, dann ein Halt mit V3 = 0, dann ein Weitertransport mit der Geschwindigkeit V2 entlang eines Abschnittes x2, dann ein erneuter Halt mit V3 = 0, dann wieder ein Weitertransport mit der Geschwindigkeit V1.

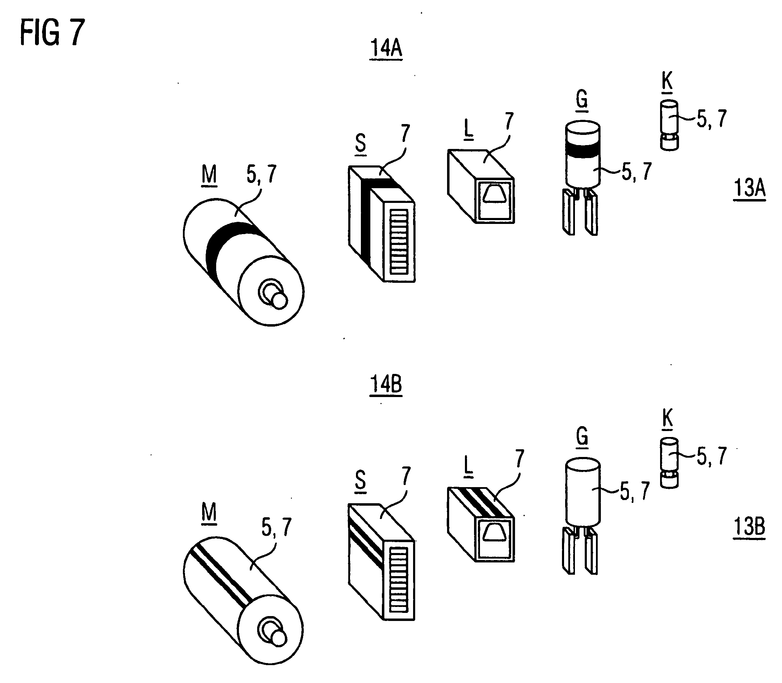

Bei der Planung der technischen Anlage sind häufig Vorgaben zu berücksichtigen, z.B. die Verwendung sicherheitsgerichteter Komponenten oder die Verwendung von Komponenten eines bestimmten Herstellers. In FIG 7 ist eine Kollektion 14a dargestellt, die die Verwendung sicherheitsgerichteter Komponenten berücksichtigt. Die sicherheitsgerichtete Ausführung einer Komponente ist in diesem Beispiel als ein Streifen auf dem Gehäuse sichtbar gemacht. Ein Komponentensatz 13A dieser Kollektion 14 A enthält soweit möglich Komponenten in sicherheitsgerichteter Ausführung. Bei einer Kollektion 14B wird der Vorgabe Rechnung getragen, dass Geräte eines bestimmten Herstellers bevorzugt aufzunehmen sind. Dies ist im Bild durch zwei Streifen auf dem Komponentengehäuse kenntlich gemacht. Ein Komponentensatz 13 B dieser Kollektion 14B ist also dahingehend optimiert, dass insbesondere Komponenten des vorgegebenen Herstellers aufgenommen sind.

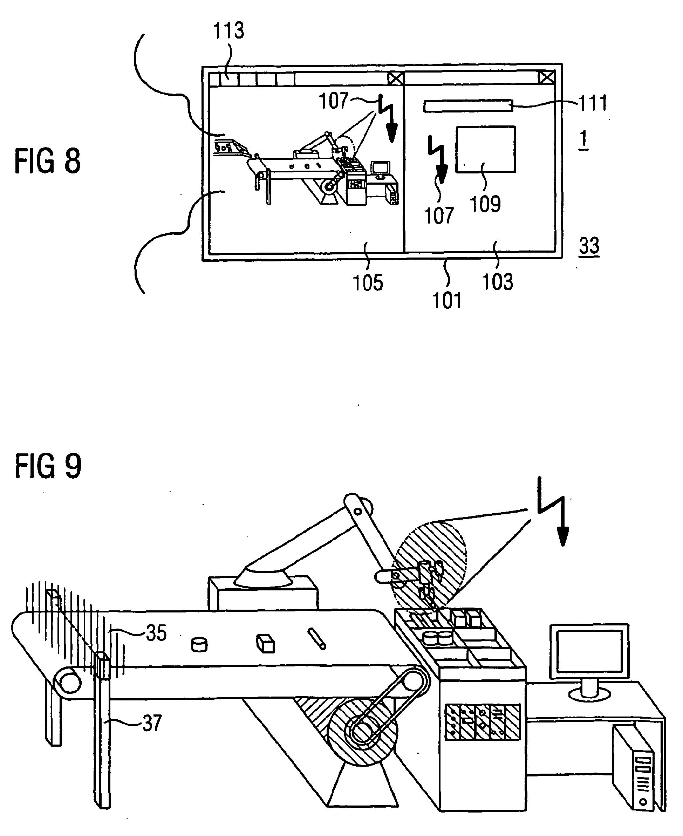

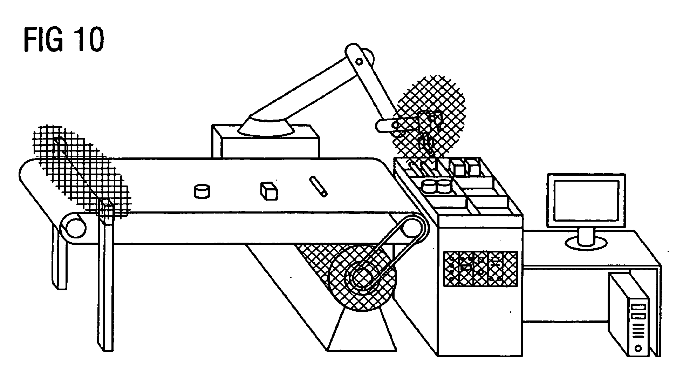

FIG 8 zeigt eine Visualisierungsvorrichtung 33 einer Planungsvorrichtung 1. Auf einer grafischen Benutzerschnittstelle 101 sind ein erstes Fenster 103 und ein zweites Fenster 105 dargestellt. Im zweiten Fenster 105 ist die technische Anlage 3 grafisch abgebildet. Im ersten Fenster 103 wird mittels eines Eingabedialogs 111 ein bestimmter Komponentensatz für ein Modul der technischen Anlage ausgewählt. Mittels eines Menüs 113 wird eine Simulation des Fertigungsablaufes der technischen Anlage mit dem ausgewählten Komponentensatz durchgeführt. Wird eine Abweichung der simulierten Funktionalität von der vorgegebenen Sollfunktionalität festgestellt, so erfolgt ein Fehlerhinweis 107. Im ersten Fenster 103 wird eine Fehlerbeschreibung 109 für den Fehlerhinweis 107 ausgegeben. In FIG 9 ist dargestellt, wie ein erster Komponentensatz durch eine Linienschraffur kenntlich gemacht wird, unterschieden von einer Kreuzschraffur eines anderen Komponentensatzes in FIG 10. Während mit dem Komponentensatz aus FIG 10 die Sollfunktionalität erreicht wird, ergibt sich mit den Komponentensatz der FIG 9 ein Fehlerhinweis.

## Patentansprüche

1. Vorrichtung (1) zur Planung einer technischen Anlage (3), wobei die technische Anlage (3) aus mechanischen Komponenten (5) und elektrischen Komponenten (7) gebildet ist, wobei jede Komponente (5, 7) eine Komponentenfunktionalität aufweist, wobei aus einer Bibliothek (11) Komponentensätze (13) gebildet aus funktionell verschiedenen Komponenten (5,7) auswählbar sind, wobei die Komponentenfunktionalitäten unterteilt in unterschiedliche Detaillierungsgrade in der Bibliothek (11) abgebildet sind und aus der Bibliothek (11) ein Komponentensatz (13) mit einem gewünschten Detaillierungsgrad auswählbar ist
und wobei die Vorrichtung (1) derart ausgebildet und eingerichtet ist, dass ein Komponentensatz (13) eines höheren Detaillierungsgrades in den gleichen, bereits ausgewählten Komponentensatz (13) niedrigeren Detaillierungsgrades nach Auswahl aus der Bibliothek (11) so in den aktuellen Planungsstatus integriert wird, dass die Funktionalitäten des niedrigeren Detaillierungsgrades durch die Funktionalitäten des höheren Detaillierungsgrades ergänzt werden.

2. Vorrichtung (1) nach Anspruch 1, bei der Komponentenfunktionalitäten zumindest teilweise durch Parameter (17) abgebildet sind.

3. Vorrichtung (1) nach Anspruch 2, bei der Komponentenfunktionalitäten zumindest teilweise durch Funktionsautomaten (F) so abgebildet sind, dass in Verbindung mit Parametern eine Funktion darstellbar ist.

4. Vorrichtung (1) nach Anspruch 2 oder 3, bei der Komponentenfunktionalitäten zumindest teilweise durch mathematische Funktionen (V) abgebildet sind, mittels derer eine Transformation von ersten Parametern auf zweite, die Komponentenfunktionalität beschreibende Parameter erfolgt.

5. Vorrichtung (1) nach einem der vorhergehenden Ansprüche, bei der Komponentensätze (13) in einer Kollektion (14) gruppiert sind.

6. Vorrichtung (1) nach einem der vorhergehenden Ansprüche, bei der auswählbare Funktionalitäten von Komponentensätzen (13) vor einem Anwender unsichtbar geschaltet werden können.

7. Vorrichtung (1) nach einem der vorhergehenden Ansprüche, wobei die technische Anlage (3) aus Modulen (9) mit den mechanischen Komponenten (5) und elektrische Komponenten (7) gebildet ist, wobei jedes Modul (9) eine Sollfunktionalität aufweist, **dadurch gekennzeichnet, dass** prüfbar ist, ob die sich mit einem ausgewählten Komponentensatz (13) sich für ein Modul (9) ergebende Modulfunktionalität mit der Sollfunktionalität im Rahmen einer vorgebbaren Genauigkeit übereinstimmt.

8. Vorrichtung (1) nach Anspruch 7, bei der die Prüfung auf Übereinstimmung durch einen Vergleich von Sollparametern (12), die die Sollfunktionalität charakterisieren, mit entsprechenden Komponentenparametern (17) des Komponentensatzes (13) erfolgt.

9. Vorrichtung (1) nach Anspruch 7, bei der die Prüfung auf Übereinstimmung durch eine Simulation der Modulfunktionalität erfolgt, wobei der Simulation die Komponentenparameter (17) zugrunde gelegt wird.

10. Vorrichtung (1) nach einem der Ansprüche 7 bis 9, bei der die elektrischen Komponenten (7) mechatronisch mit zusätzlicher mechanischer Funktionalität ausgeführt sind.

11. Vorrichtung (1) nach einem der Ansprüche 7 bis 10, die eine Visualisierungsvorrichtung (33) aufweist, in der die Module (9) grafisch abbildbar sind, wobei der Detaillierungsgrad der grafischen Darstellung entlang der Planungsstufen (21) hierarchisch absteigend wächst und wobei eine Darstellung der Unterplanungsstufe (21a) durch ein Überblenden von grafischen Elementen (35) aus dieser Unter-Planungsstufe (21a) über die Elemente (37) ihrer Oberplanungsstufe (21b) so erfolgt, dass die schematischere Darstellung der Oberplanungsstufe (21b) durch den höheren Detailreichtum der Unterplanungsstufe (21a) angereichert wird.

12. Vorrichtung (1) nach einem der vorhergehenden Ansprüche, bei der die technische Anlage (3) eine Fertigungsanlage (3) zur Fertigung eines Produktes (41) ist.

13. Verfahren zur Planung einer technischen Anlage (3), wobei die technische Anlage (3) aus mechanischen Komponenten (5) und elektrischen Komponenten (7) gebildet ist, wobei jede Komponente (5, 7) eine Komponentenfunktionalität aufweist und wobei aus einer Bibliothek (11) Komponentensätze (13) gebildet aus Komponenten (5,7) ausgewählt werden, wobei die Komponentenfunktionalitäten unterteilt in unterschiedliche Detaillierungsgrade in der Bibliothek (11) abgebildet sind und aus der Bibliothek (11) ein Komponentensatz (13) mit einem gewünschten Detaillierungsgrad ausgewählt wird
und wobei ein Komponentensatz (13) eines höheren Detaillierungsgrades in den gleichen, bereits ausgewählten Komponentensatz (13) niedrigeren Detaillierungsgrades nach Auswahl aus der Bibliothek (11) so in den aktuellen Planungsstatus integriert wird, dass die Funktionalitäten des niedrigeren Detaillierungsgrades durch die Funktionalitäten des höheren Detaillierungsgrades ergänzt werden.

## Claims

1. Device (1) for planning a technical installation (3), with the technical installation (3) being formed from mechanical components (5) and electrical components (7), with each component (5, 7) having a component functionality, with component sets (13) formed from functionally-different components (5, 7) able to be selected from a library, with the component functionalities being mapped in the library (11) divided into different degrees of detailing and with a component set (13) able to be selected from the library (11) with a desired degree of detailing
and with the planning device (1) being embodied and configured such that a component set (13) of a higher level of detailing is integrated into the same already selected component set (13) of a lower level of detailing after selection from the library (11) into the actual planning status so that the functionalities of the lower level of detailing are supplemented by the functionalities of the higher level of detailing.

2. Planning device (1) according to claim 1, in which component functionalities are mapped at least partly by parameters (17).

3. Planning device (1) according to claim 2, in which component functionalities are mapped at least partly by function automata (F) so that a function is able to be represented in conjunction with parameters.

4. Planning device (1) according to claim 2 or 3, in which component functionalities are mapped at least partly by mathematical functions (V) by means of which a transformation from first parameters to second parameters describing the component functionality is undertaken.

5. Planning device (1) according to one of the previous claims, in which component sets (13) are grouped into a collection (14).

6. Planning device (1) according to one of the previous claims, in which the selectable functionalities of component sets (13) can be switched to be invisible to a user.

7. Planning device (1) according to one of the previous claims, in which the technical installation is formed from modules (9) with mechanical components (5) and electrical components (7), with each module having a required functionality, **characterized in that** it is able to be checked whether the module functionality produced for a module (9) with a selected component set (13) matches the required functionality within the framework of a predetermined accuracy.

8. Planning device (1) according to claim 7, in which the checking for a match is undertaken by comparing required parameters (12) which characterize the required functionality with corresponding component parameters (17) of the component set (13).

9. Planning device (1) according to claim 7, in which the checking for a match is undertaken by a simulation of the module functionality, with the simulation being based on the component parameters (17).

10. Planning device (1) according to one of claims 7 to 9, in which the electrical components (7) are designed mechatronically with additional mechanical functionality.

11. Planning device (1) according to one of claims 7 to 10, featuring a visualization device (33) in which the modules (9) can be mapped graphically, with the level of detailing of the graphical representation along the planning stages (21) growing in ascending hierarchical order and with a representation of a lower planning level (21a) being undertaken by an overlaying of graphical elements (35) from this lower planning level (21a) over the elements (37) of an upper planning level (21b) so that the more schematic representation of the upper planning level (21b) is enriched by the higher level of detail of the lower planning level (21a).

12. The planning device (1) according to one of the previous claims, in which the technical installation (3) is a production installation (3) for producing a product (41).

13. Method for planning a technical installation (3), with the technical installation (3) being formed from mechanical components (5) and electrical components (7), with each component (5, 7) having a component functionality and with component sets (13) formed from components being selected from a library (11), with the component functionalities being mapped in the library (11) divided into different degrees of detailing and a component set (13) is able to be selected from the library (11) with a desired degree of detailing and with a component set (13) of a higher level of detailing being integrated into the same, already selected component set (13) of a lower level of detailing after selection from the library (11) such that the functionalities of the lower level of detailing are supplemented by the functionalities of the higher level of detailing.

## Revendications

1. Dispositif (1) de planification d'une installation technique (3), l'installation technique (3) étant constituée de composants mécaniques (5) et de composants électriques (7), chaque composant (5, 7) présentant une fonctionnalité de composant, des jeux de composants (13) constitués de composants fonctionnellement différents (5, 7) pouvant être sélectionnés à partir d'une bibliothèque (11), les fonctionnalités des composants étant représentées dans la bibliothèque sous une forme subdivisée en différents degrés de détail et un jeu de composants (13) avec un degré de détail souhaité pouvant être sélectionné à partir de la bibliothèque (11)
et le dispositif (1) étant réalisé et aménagé de manière telle qu'un jeu de composants (13) d'un degré de détail plus élevé est intégré au même jeu de composants (13) déjà sélectionné et dont le degré de détail est inférieur après sélection à partir de la bibliothèque (11) de manière telle au statut de planification actuel que les fonctionnalités du degré de détail inférieur sont complétées par les fonctionnalités du degré de détail supérieur.

2. Dispositif (1) selon la revendication 1, dans lequel des fonctionnalités de composants sont représentées au moins en partie par des paramètres (17).

3. Dispositif (1) selon la revendication 2, dans lequel des fonctionnalités de composants sont représentées au moins en partie par des automates de fonctions (F) de manière telle qu'une fonction peut être représentée en liaison avec des paramètres.

4. Dispositif (1) selon la revendication 2 ou 3, dans lequel des fonctionnalités de composants sont représentées au moins en partie par des fonctions mathématiques (V) au moyen desquelles il se produit une transformation de premiers paramètres en de deuxièmes paramètres décrivant la fonctionnalité de composants.

5. Dispositif (1) selon l'une des revendications précédentes, dans lequel des jeux de composants (13) sont groupés en une collection (14).

6. Dispositif (1) selon l'une des revendications précédentes, dans lequel des fonctionnalités sélectionnables de jeux de composants (13) peuvent être commutées pour être invisibles pour un utilisateur.

7. Dispositif (1) selon l'une des revendications précédentes, l'installation technique (3) étant constituée de modules (9) avec des composants mécaniques (5) et des composants électriques (7), chaque module (9) présentant une fonctionnalité prescrite, **caractérisé en ce qu'**il peut être vérifié si la fonctionnalité du module résultant, pour un module (9), d'un jeu de composants sélectionné (13) coïncide avec la fonctionnalité prescrite dans le cadre d'une précision prédéterminable.

8. Dispositif (1) selon la revendication 7, dans lequel la vérification de la coïncidence s'effectue par une comparaison de paramètres prescrits (12) qui caractérisent la fonctionnalité prescrite avec des paramètres correspondants de composants (17) du jeu de composants (13).

9. Dispositif (1) selon la revendication 7, dans lequel la vérification de la coïncidence s'effectue par une simulation de la fonctionnalité de module, la simulation reposant sur les paramètres de composants (17).

10. Dispositif (1) selon l'une des revendications 7 à 9, dans lequel les composants électriques (7) sont réalisés mécatroniquement avec une fonctionnalité mécanique additionnelle.

11. Dispositif (1) selon l'une des revendications 7 à 10, lequel comporte un dispositif de visualisation (33) dans lequel les modules peuvent être représentés graphiquement, le degré de détail de la représentation graphique croissant le long des niveaux de planification (21) descendant hiérarchiquement et une représentation du niveau de planification inférieur (21a) s'effectuant de manière telle par une superposition d'éléments graphiques (35) de ce niveau de planification inférieur (21a) sur les éléments (37) de son niveau de planification supérieur (21b) que la représentation plus schématique du niveau de planification supérieur (21b) est enrichie par la plus grande richesse de détails du niveau de planification inférieur (21a).

12. Dispositif (1) selon l'une des revendications précédentes, dans lequel l'installation technique (3) est une installation de production (3) pour fabriquer un produit (41).

13. Procédé de planification d'une installation technique (3), l'installation technique (3) étant constituée de composants mécaniques (5) et de composants électriques (7), chaque composant (5, 7) présentant une fonctionnalité de composant et des jeux de composants (13) constitués de composants (5, 7) étant sélectionnés à partir d'une bibliothèque (11), les fonctionnalités des composants étant représentées dans la bibliothèque (11) sous une forme subdivisée en différents degrés de détail et un jeu de composants (13) avec un degré de détail souhaité étant sélectionné à partir de la bibliothèque (11) et un jeu de composants (13) d'un degré de détail plus élevé étant intégré au même jeu de composants (13) déjà sélectionné et dont le degré de détail est inférieur après sélection à partir de la bibliothèque (11) de manière telle au statut de planification actuel que les fonctionnalités du degré de détail inférieur sont complétées par les fonctionnalités du degré de détail supérieur.
